# Europäisches Patentamt

# European Patent Office

# Office européen des brevets

(11) Publication number: **0 132 332**
**B1**

(12) **EUROPEAN PATENT SPECIFICATION**

(45) Date of publication of patent specification: **08.04.87**

(51) Int. Cl.⁴: **C 23 F 13/02**

(21) Application number: **84304536.0**

(22) Date of filing: **03.07.84**

(54) Cathodic protection system for pipes.

(30) Priority: **09.07.83 GB 8318623**

(43) Date of publication of application:
**30.01.85 Bulletin 85/05**

(45) Publication of the grant of the patent:
**08.04.87 Bulletin 87/15**

(84) Designated Contracting States:
**AT BE CH DE FR GB IT LI LU NL SE**

(56) References cited:
**GB-A-1 508 852**
**US-A-3 707 450**
**US-E- 27 529**

(73) Proprietor: **Webco Industrial Rubber Limited**
**Greenbank Place**
**Tullos Aberdeen AB1 4BT Scotland (GB)**

(72) Inventor: **Webster, George Andrew**
**1 Leggart Place**
**Aberdeen AB1 5UN Scotland (GB)**

(74) Representative: **Pattullo, Norman et al**
**Ian G. Murgitroyd and Company Mitchell House**
**333 Bath Street**
**Glasgow G2 4ER Scotland (GB)**

## Description

This invention relates to a cathodic protection system for pipes.

In order to protect pipes, such as in subsea pipelines, from mechanical damage or corrosion, they have been coated with concrete or other material.

Previously, in cases of failure of the corrosion coating, pipelines have been further protected by attached sacrificial anodes. These usually take the form of bracelets having on their inner face bolted to the pipe, an annular steel strip, the anode being electrically connected to the pipe through the steel strip.

With thick pipe coatings, such as concrete, the anode does not stand proud, but the coated pipe is rigid and heavy. With thinner pipe coatings the coated pipe can be sufficiently flexible for laying by a reel barge, but the bracelet does stand proud and during laying of such pipelines it is necessary to stop periodically to fit each anode beyond the barge's rollers prior to the pipe going into the sea; the pipeline with anodes already fitted would not pass over the pipe-laying rollers on the reel barge.

Alternatively a long tapered section is fitted at either side of the anode to enable the anode to pass over the rollers, but this can provide production problems as well as a non-uniform overall pipeline diameter.

According to the present invention there is provided a pipe having an elastomeric coating, a sacrificial anode embedded in the elastomeric coating and surrounded by the elastomeric coating apart from an outer face of the anode which is exposed to the ambient environment, the anode being in electrical communication with the pipe and the outer face of the anode being substantially flush with the outer wall of the coating.

The anode may be in electrical communication with the pipe through an electrical conductor, for example a steel wire or plate, extending between them, and to provide good electrical contact bewteen the conductor and the anode the former may extend within the latter to form a central core for the anode. Anodes can be manufactured with a wire core for this purpose, the wire extending from the anode to be secured to the pipe during fitment. The wire may be secured by welding, crimping or other fixing means.

The welding can be for example CAD welding, in which a magnesium alloy is ignited to fuse together the parts being welded, or conventional welding.

The conductor should be electrically inert with respect to the pipe.

Preferably the anode is elongate and extends longitudinally of the pipe. In this way a large mass of anodic material can be disposed on the pipe to provide sacrificial corrosion over a long period of time, with consequent protection for the pipeline. For example on a 12 metre long pipe the anode may extend over substantially the full length of the pipe.

More than one anode can be provided on the pipe if the amount of pipe to be protected warrants it. Provision of a number of anodes allows the thickness of each anode to be reduced, and this can be important when the elastomeric coating on the pipe is thin; each anode can then be correspondingly thin so as to maintain the uniform diameter of the coated pipe along its length. The anodes can be disposed at regular intervals around the pipe.

The position of the anode in the coating allows excellent protection of the pipe, as the elastomeric coating on the pipe is not broken by the anode. The anode is embedded in the coating so as to be entirely surrounded by the coating with the exception of the anode's outer face which is exposed for corrosion to the ambient environment. Thus the coating remains intact and corrosion of the anode does not result in seawater or other ambient corrosive material gaining access to the pipe. A pathway is formed for electrical communication between the anode and the pipe, but when this is provided by a conductor which is electrically inert to the pipe in the ambient environment this pathway can be maintained fluid-tight as necessary without corrosion of the conductor. The pipe can thus be isolated from its environment.

The intact coating on the pipe provided by the elastomer can also serve to bond the anode to the pipe and to provide a flexible connection between them.

The elastomeric coating is preferably from 4 to 12 mm, most preferably 4 to 10 mm thick. Preferably also the anode has at least 2 mm of elastomer between it and the pipe.

In a pipeline made up of end-to-end pipes, the pipe of this invention can if desired be fitted with a sufficient number and mass of anodes to provide sacrificial corrosion protection not only for itself but also for a number of adjacent pipes in the pipeline. Thus, a pipe of this invention may be provided only, say, every fifth or sixth pipe in the line, so long as there is electrical communication between the pipe, for example by welded joints between them. The sacrificial corrosion of the anode may then proceed to the benefit of the connected pipes. The adjacent pipes may or may not be elastomer coated.

An embodiment of the present invention will now be described by way of example with reference to the accompanying drawings, in which:

Figure 1 is a side sectional view of an end portion of a pipe of the present invention;

Figure 2 is a top plan view corresponding to Figure 1;

Figure 3 is a side sectional view of an end portion of an alternative pipe of this invention; and

Figure 4 is an end sectional view corresponding to Figure 3.

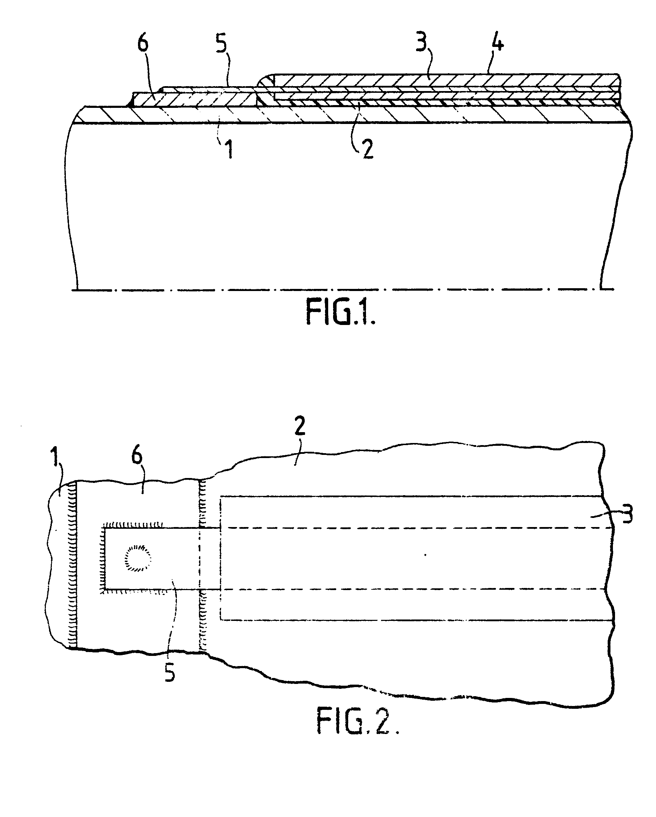

Referring to Figures 1 and 2 of the drawings, a steel pipe 1 has an elastomer coating 2 extending along its surface, the coating 2 being vulcanised and bonded to the pipe 1. The elastomer is polychloroprene rubber which is sold under the Trade Mark Linecote by Webco Industrial Rubber Limited and provides heat-resistant and chemical-resistant coating which is impervious to moisture and sea water. The Linecote coating 2 is also resistant to abrasion, has high tear and tensile strength, is resistant to ozone attack and has low temperature flexibility down to minus 30 degrees centigrade.

Embedded within the elastomer coating 2 is an anode 3 in the form of a magnesium alloy strip which is 8 mm thick and 30 mm wide. The material of the anode 3 can be selected from any conventional material used as sacrificial anode material with respect to steel. The anode extends along the length of the coating 2, terminating slightly short of each end, so as to be entirely surrounded by the elastomeric coating with the exception of the outer face 4 which remains exposed to the ambient environment.

A steel core strip 5 extends through the anode 3 so as to be in intimate contact with the anode material, and this core strip 5 extends from the end of the anode 3 and through the end portion of the elastomer coating 2 to a steel doubler ring 6 which is welded as a collar on the pipe 1. The steel core strip 5 is welded to the doubler ring 6.

The doubler ring 6 protects the pipe 1 from local defects which may be introduced by welding the core strip 5 directly to the pipe 1.

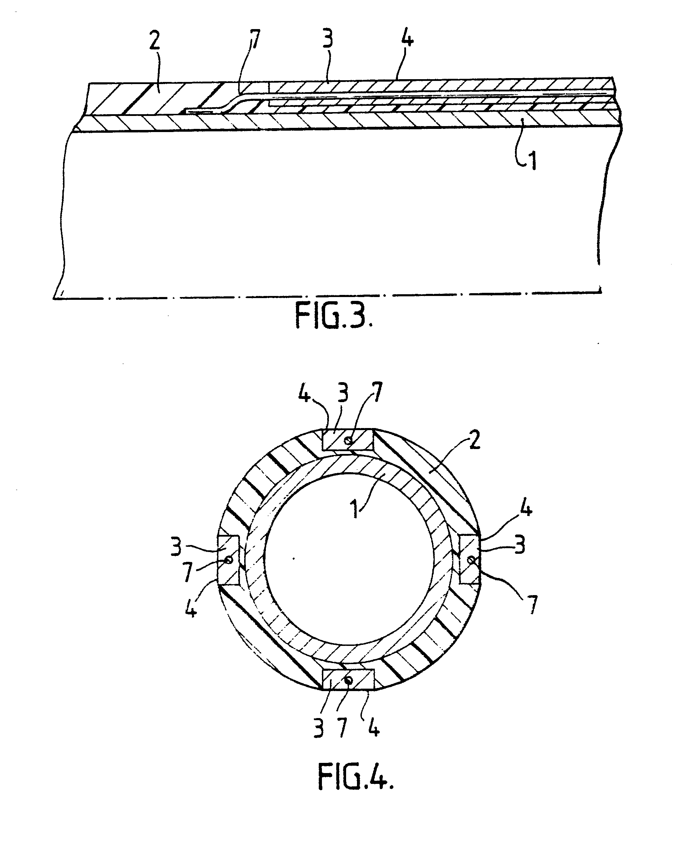

Figures 3 and 4 show a similar construction, but four anodes 3 are provided at equal intervals around the pipe 1, each anode 3 extending substantially the length of the pipe 1. In Figures 3 and 4 the core strip 5 is replaced by steel rods 7 extending through the anodes 3 and welded directly at their projecting ends to the pipe 1 by CAD welding which does not produce localised stress in the pipe.

In both of these embodiments the entire pipe 1 is ultimately coated by the elastomeric coating 2 by applying an additional portion of coating over an area of connection between the steel core strip 5 and the doubler ring 6 (in Figure 1) or between the steel rods 7 and the pipe 1 (in Figure 3). Thus, the pipe is fully coated by protective elastomer, while in the event of damage to the coating 2 the anodes 3 provide sacrificial protection for the pipe.

The pipe of Figure 3 is manufactured as follows.

The steel pipe 1 12 metres long is shotblasted for thorough cleaning, and a primer is applied, followed by a bonding agent, to the pipe's outer surface. An unvulcanised strip of Linecote polychloroprene rubber 6 mm thick is extruded and wound helically around the pipe 1.

Anodes 3 11 metres long are made with their central core of steel rod 7, and are shotblasted before fitment to the pipe 1. The anodes 3 are then laid on the surface of the unvulcanised Linecote and nylon tape is wound round the assembly at high tension to bind the assembly together.

The bound assembly is placed in a steam autoclave and heated at 4.2 kg per square cm pressure and 150 degrees centigrade for two hours, during which time the Linecote elastomer softens and the nylon tape shrinks, causing the anodes 3 to sink into the elastomer. The elastomer flows around the anodes, and becomes vulcanised. In this state the elastomer bonds to the pipe 1 and to the anodes 3.

The assembly is then cooled and the nylon tape is unwound.

The steel rods 7 can then be welded to the pipe 1 and a coating of Linecote applied over the exposed area.

The pipe is then ready for welding to adjacent pipes to form a pipeline, and this can be placed on the sea bed for passage of oil, gas or other fluids, for example from offshore oil installations.

The pipe can be laid by reel barge, passing easily over rollers on the barge without interference, and the relatively thin and narrow anodes 3 allow the pipe to flex without adding significantly to its rigidity.

The flush-fitting anodes 3 are also of advantage when a trenching machine is run along the pipe on the sea bed. With conventional elastomer-coated pipes the machine had to be disconnected at each bracelet-type anode which stood proud of the coated pipe, but in the present case the anodes do not interfere with the travel of the machine.

The pipe can be included in a pipeline adjacent other elastomer-coated pipes or may be located adjacent pipes which have thin paint coatings. As these paint coatings deteriorate and sea water gains access to the pipes, the anodes 3 protect the adjacent pipes from corrosion by themselves corroding sacrificially, the electrical connection between the anodes 3 and the painted pipes being provided by the steel rods 7 and the inter-pipe welds.

Modifications and improvements may be made without departing from the scope of the invention.

**Claims**

1. A pipe having an elastomeric coating, a sacrificial anode embedded in the elastomeric coating and surrounded by the elastomeric coating apart from an outer face of the anode which is exposed to the ambient environment, the anode being in electrical communication with the pipe and the outer face of the anode being substantially flush with the outer wall of the coating.

2. A pipe according to Claim 1, wherein the anode and the pipe are in electrical communication by means of an electrical conductor extending between them, the conductor being electrically inert with respect to the pipe.

3. A pipe according to Claim 2, wherein the electrical conductor is secured to the pipe by welding or crimping.

4. A pipe according to Claim 2 or 3, wherein the electrical conductor is secured within the anode.

5. A pipe according to Claim 4, wherein the electrical conductor is in the form of a core which extends through the anode.

6. A pipe according to any one of the preceding claims, wherein the anode is elongate and extends longitudinally of the pipe.

7. A pipe according to Claim 6, wherein the anode extends substantially along the entire length of the pipe.

8. A pipe according to any one of the preceding claims, wherein the elastomeric coating has a thickness of from 4 to 12 mm.

9. A pipe according to any one of the preceding claims, wherein the anode is radially spaced from the pipe by at least 2 mm through the elastomeric coating.

10. A pipe according to any one of the preceding claims, wherein a plurality of anodes are provided embedded in the elastomeric coating.

## Patentansprüche

1. Rohr, mit einer elastomerischen Beschichtung, einer Opferanode, die in der elastomerischen Beschichtung eingebettet ist und mit Ausnahme einer der umliegenden Umgebung ausgesetzten Außenfläche der Anode von der elastomerischen Beschichtung umgeben ist, wobei die Anode mit dem Rohr elektrisch verbunden ist und die Außenfläche der Anode im wesentlichen bündig mit der Außenwand der Beschichtung abschließt.

2. Rohr nach Anspruch 1, bei dem die Anode und das Rohr mittels eines sich zwischen ihnen erstreckenden elektrischen Leiters elektrisch verbunden sind, wobei der Leiter in bezug auf das Rohr elektrisch inert ist.

3. Rohr nach Anspruch 2, bei dem der elektrische Leiter durch Schweißen oder Krimpen an dem Rohr befestigt ist.

4. Rohr nach Anspruch 2 oder 3, bei dem der elektrische Leiter innerhalb der Anode befestigt ist.

5. Rohr nach Anspruch 4, bei dem der elektrische Leiter als sich durch die Anode erstreckender Kern ausgebildet ist.

6. Rohr nach einem der vorhergehenden Ansprüche, bei dem die Anode langgestreckt ist und längs des Rohrs verläuft.

7. Rohr nach Anspruch 6, bei dem sich die Anode im wesentlichen entlang der gesamten Länge des Rohrs erstreckt.

8. Rohr nach einem der vorhergehenden Ansprüche, bei dem die elastomerische Beschichtung eine Dicke von 4 bis 12 mm hat.

9. Rohr nach einem der vorhergehenden Ansprüche, bei dem die Anode durch die elastomerische Beschichtung einen mindestens 2 mm betragenden radialen Abstand von dem Rohr hat.

10. Rohr nach einem der vorhergehenden Ansprüche, bei dem mehrere Anoden vorgesehen sind, die in die elastomerische Beschichtung eingebettet sind.

## Revendications

1. Tube comportant un revêtement élastomère, une anode réactive noyée dans le revêtement élastomère et entourée par ledit revêtement élastomère à l'exception d'une surface extérieure de l'anode qui est exposée à l'environnement ambiant, l'anode étant en communication électrique avec le tube et la surface extérieure de l'anode étant sensiblement de niveau avec la paroi extérieure du revêtement.

2. Tube suivant la revendication 1, caractérisé en ce que l'anode et le tube sont en communication électrique par l'intermédiaire d'un conducteur électrique qui s'étend entre eux, ledit conducteur étant électriquement inerte par rapport au tube.

3. Tube suivant la revendication 2, caractérisé en ce que le conducteur électrique est fixé au tube par soudage ou sertissage.

4. Tube suivant la revendication 2 ou la revendication 3, caractérisé en ce que le conducteur électrique est fixé à l'intérieure de l'anode.

5. Tube suivant la revendication 4, caractérisé en ce que le conducteur électrique se présente sous la forme d'une âme qui s'étend dans l'anode.

6. Tube suivant l'une quelconque des revendications précédentes, caractérisé en ce que l'anode est allongée et s'étend longitudinalement par rapport au tube.

7. Tube suivant la revendication 6, caractérisé en ce que l'anode s'étend sensiblement sur toute la longueur du tube.

8. Tube suivant l'une quelconque des revendications précédentes, caractérisé en ce que le revêtement élastomère a une épaisseur comprise entre 4 et 12 mm.

9. Tube suivant l'une quelconque des revendications précédentes, caractérisé en ce que l'anode est espacée radialement du tube d'au moins 2 mm de revêtement élastomère.

10. Tube suivant l'une quelconque des revendications précédentes caractérisé en ce qu'une pluralité d'anodes sont noyées dans le revêtement élastomère.

FIG.1.

FIG.2.

FIG.3.

FIG.4.